# FASCICULE DE BREVET EUROPEEN

(11) **EP 0 688 525 B1**
(45) Date de publication et mention de la délivrance du brevet: **10.04.2002**
(21) Numéro de dépôt: 94400131.2
(22) Date de dépôt: 21.01.1994
(51) Int. Cl.: A47J 36/02, B21D 39/03, B23P 11/00, B44B 5/00

(54) **Procédé pour modifier les caractéristiques d'une surface de métal**
Verfahren für Eigenschaftsänderung einer Metalloberfläche
Method for modifying the characteristics of a metal surface

(43) Date de publication de la demande: 27.12.1995
(73) Titulaire: SEB S.A., 69130 Ecully (FR)
(72) Inventeur: Coppier, Michel, F-74150 Rumilly (FR)
(74) Mandataire: Keib, Gérard

(56) Documents cités:
- DE-A- 3 728 037
- DE-U- 9 111 901
- FR-A- 2 302 174
- US-A- 3 100 340

## Description

La présente invention concerne un procédé pour modifier les caractéristiques d'une surface d'un métal.

L'aluminium est un métal qui présente de nombreux avantages. Il est léger, facilement emboutissable et matriçable, et conduit bien la chaleur. De plus, il est relativement économique. Du fait de ces qualités, il est universellement utilisé dans l'industrie, notamment pour réaliser des récipients culinaires. Il présente cependant des défauts. Tout d'abord, il est relativement mou, de sorte que sa surface se raye facilement. Dans les applications ménagères, l'aluminium est souvent revêtu d'une couche anti-adhésive telle que du polyétrafluoréthylène ou d'une couche d'émail. Toutefois, la durée de vie de ces revêtements est limitée du fait que l'aluminium est un support trop mou. Par ailleurs, les articles en aluminium et en particulier les récipients de cuisson ont tendance à se déformer facilement sous l'effet de la chaleur engendrée par exemple par une plaque électrique de cuisson ou un brûleur à gaz.

Pour remédier à cette difficulté, on peut soit augmenter l'épaisseur du métal, soit appliquer sur la paroi en aluminium, par exemple par frappe à chaud, une feuille en acier inoxydable. Toutefois, dans ce cas, on augmente sensiblement le coût de fabrication et on réduit la conductibilité thermique, ce qui allonge les temps de cuisson.

Enfin, les ustensiles en aluminium ne peuvent être chauffés par induction, car ce mode de chauffage nécessite l'utilisation de récipients en métal magnétique tel que l'acier inoxydable ferritique.

Il existe des procédés qui permettent de modifier, d'une manière économique, les caractéristiques de la surface d'un métal. Un tel procédé consiste à appliquer sur la surface du métal une grille d'un autre métal, cette grille étant fixée par matriçage. La grille peut présenter toutes sortes de mailles en fils, carrées, rectangulaires, hexagonales ou autres. Elle peut aussi se présenter sous la forme d'une feuille de métal perforé, comme dans le document FR-A-2 302 174, dans lequel chaque perforation présente une lèvre. On applique la feuille perforée sur la surface, les lèvres des perforations formant des proéminences dirigées vers ladite surface.

L'inconvénient, dans le cas d'une feuille perforée, provient de son défaut d'ancrage véritable dans la matière de la surface. Cela pourrait éventuellement engendrer à plus ou moins long terme un décollement de la feuille.

On connaît par ailleurs des procédés de sertissage permettant de fixer un volume défini dans un support. Le document US-A-3 100 340, par exemple, décrit un procédé de sertissage de plaquette de frein dans un support constitué par une plaque perforée. Chaque perforation comporte une lèvre façonnée de manière à former un angle avec le plan de la plaque perforée et à présenter une extrémité de lèvre perpendiculaire audit plan de la plaque perforée. Après introduction de reliefs saillant de la plaquette de frein dans les perforations de la plaque perforée, une opération de laminage assure l'ancrage de la plaquette sur son support, les lèvres des perforations se redressant dans le plan de la feuille perforée pour enserrer les reliefs de la plaquette à fixer.

Ce type de sertissage associé à une opération de laminage permet d'enchâsser un objet au volume défini dans un support ou sur une monture.

Le but de la présente invention est de proposer un procédé qui permette de réaliser un ancrage sûr d'une feuille perforée sur une surface.

A cet effet il est proposé un procédé pour modifier les caractéristiques d'une surface de métal par application sur ladite surface d'une feuille perforée d'un autre métal, la feuille perforée devant être fixée sur la surface par matriçage, procédé dans lequel, de manière connue, :
- on façonne la feuille perforée de telle sorte que chaque perforation présente une lèvre et une extrémité de lèvre; et
- on applique la feuille ainsi façonnée sur la surface, les lèvres des perforations formant des proéminences dirigées vers la surface.

Selon l'invention, on sertit par matriçage ladite feuille façonnée sur ladite surface de sorte que les extrémités de lèvre pénètrent dans la matière de la surface et que les lèvres sont redressées dans le plan de la feuille perforée, le redressement des lèvres et des extrémités de lèvre associé au fluage de matière de la surface dans les perforations réalisant un ancrage sûr de la feuille sur la surface.

On obtient ainsi une surface composite composée de deux couches de métaux différents et associés l'un à l'autre d'une part par le matriçage et d'autre part par des points d'ancrage sûrs.

D'autres caractéristiques de l'invention apparaîtront dans la description ci-après en référence aux dessins , donnés à titre d'exemples non limitatifs, sur lesquels :
- la figure 1 est une vue schématique en coupe d'une plaque de métal et d'une feuille façonnée perforée avant matriçage, dans un mode de réalisation préféré de l'invention ;
- la figure 2 est une vue schématique en coupe de l'ensemble de la figure 1 après matriçage.
- la figure 3 est une vue schématique en coupe d'un récipient culinaire obtenu selon le procédé
- la figure 4 est une vue schématique en coupe d'un récipient culinaire d'un autre mode de réalisation.

La première étape du procédé selon l'invention consiste à façonner une feuille 3 de métal 4 perforée de telle sorte que chaque perforation 6 présente une lèvre 5 et une extrémité de lèvre 7. Dans le mode de réalisation préféré de l'invention, chaque lèvre 5 forme un angle A avec le plan D de feuille 3 et présente une extrémité de lèvre 7 perpendiculaire au plan D de la feuille 3. L'étape suivante consiste à appliquer la feuille 3 ainsi façonnée sur une surface 1 de métal 2 de telle sorte que les lèvres 5 forment des proéminences dirigées vers la surface 1. La dernière étape consiste à effectuer le matriçage réalisant ainsi le sertissage de la feuille 3 sur la surface 1, le redressement des lèvres 5 et des extrémités de lèvre 7 associé au fluage de matière 2 de la surface 1 dans les perforations 6 réalisant un ancrage sûr 8 de la feuille 3 sur la surface 1. Dans le mode de réalisation préféré de l'invention, les extrémités de lèvre 7 réalisent, lors du redressement, un biseau d'angle A avec la perpendiculaire au plan D de la feuille 3 constituant alors, avec la matière 2 fluée de la surface 1, un ancrage sûr 8 en queue d'aronde.

Le métal 2 préféré de la surface 1 relativement mou est de l'aluminium.

Le métal 2 peut toutefois également être du cuivre, de l'étain, du plomb, ou un alliage d'un ou plusieurs de ces métaux, ou tout autre métal ou alliage.

La feuille 3 peut ainsi être en acier inoxydable magnétique.

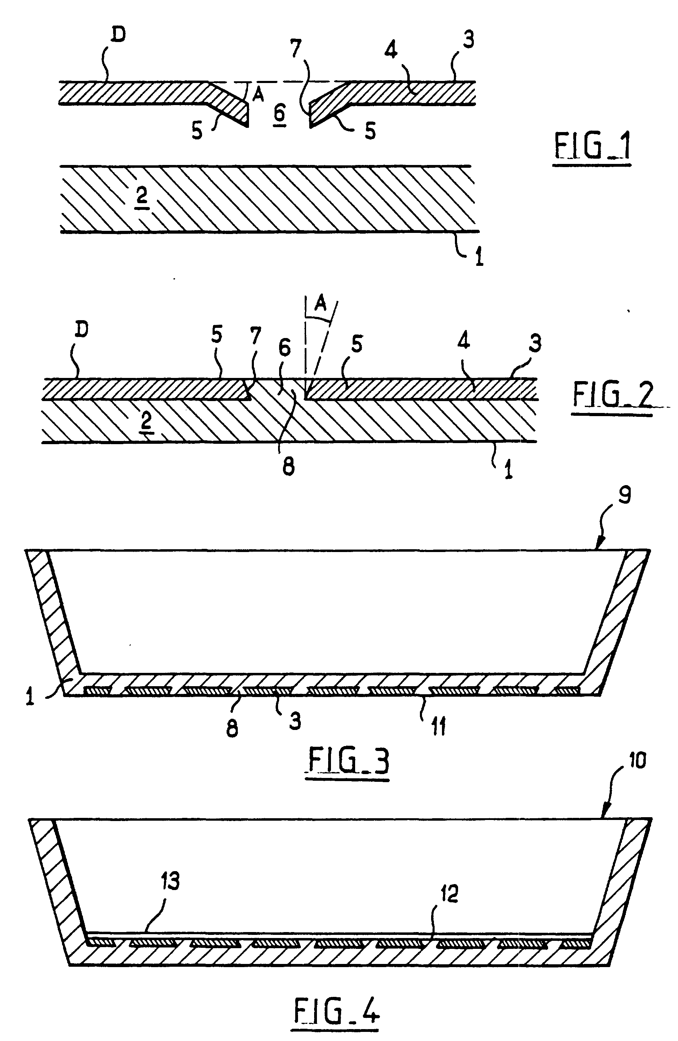

La feuille 3 encastrée dans le fond d'un récipient 9 (fig 3), confère à celui-ci les avantages techniques suivants :
a) durcissement du fond du récipient, qui permet à celui-ci de mieux résister à l'usure,
b) amélioration de la résistance du fond aux déformations engendrées par les variations de température ; de ce fait, le fond reste plan et le transfert thermique avec une plaque de cuisson reste optimal,
c) le récipient peut être chauffé par induction, grâce à la présence de l'acier magnétique,
d) du fait que l'aluminium est un excellent conducteur de la chaleur, la chaleur emmagasinée par l'acier inoxydable de la feuille, diffuse bien et uniformément à travers du fond 11 en aluminium,
e) du fait que la feuille en acier inoxydable est discontinue, il est possible de régler à une valeur réduite la diffusion de la chaleur à travers du fond du récipient et par conséquent d'éviter un échauffement brutal et excessif des aliments,
f) la présence d'une grille n'affecte que faiblement le coût de fabrication et ne gêne en rien l'emboutissage des récipients en aluminium.

Par conséquent, le récipient de cuisson ci-dessus présente tous les avantages dus à l'utilisation de l'aluminium, tout en ayant les avantages apportés par la feuille en acier inoxydable.

Si la possibilité de chauffage par induction n'est pas recherchée, la feuille peut être en acier inoxydable austénitique (type 18/8), non magnétique, ou tout autre métal plus dur que l'aluminium.

A la figure 4, on a représenté un autre récipient culinaire 10 en aluminium, dont le fond 12 présente sur sa face intérieur une feuille 3 par exemple en acier inoxydable ou autre acier relativement dur.

Dans cet exemple, un revêtement anti-adhésif 13, par exemple en polytétrafluoréthylène, recouvre la surface intérieur du fond 12, ainsi que la feuille 3.

Bien entendu, l'invention n'est pas limitée aux exemples décrits et on peut apporter à ceux-ci de nombreuses modifications, sans sortir du cadre de l'invention.

Ainsi l'invention s'applique à d'autres domaines que la fabrication des ustensiles culinaires. Elle peut en effet s'appliquer à tout domaine technique où l'on veut modifier les propriétés de la surface d'un métal quelconque par encastrement sur celui-ci d'une feuille en un autre métal.

## Revendications

1. Procédé pour modifier les caractéristiques d'une surface (1) de métal (2) par application sur ladite; surface (1) d'une feuille perforée (3) d'un autre métal (4), ladite feuille perforée (3) devant être fixée sur ladite surface (1) par matriçage, procédé dans lequel :
- on façonne ladite feuille perforée (3) de telle sorte que chaque perforation (6) présente une lèvre (5) et une extrémité de lèvre (7) ; et
- on applique ladite feuille (3) ainsi façonnée sur ladite surface (1), lesdites lèvres (5) desdites perforations (6) formant des proéminences dirigées vers ladite surface (1) ;
**caractérisé en ce que** :
- l'on sertit par matriçage ladite feuille façonnée (3) sur ladite surface (1), de sorte que les extrémités de lèvre (7) pénètrent dans la matière (2) de la surface (1) et que les lèvres (5) sont redressées dans le plan D de ladite feuille perforée (3), le redressement des lèvres (5) et des extrémités de lèvre (7) associé au fluage de matière (2) de la surface (1) dans les perforations (6) réalisant un ancrage sûr de ladite feuille sur ladite surface.

2. Procédé selon la revendication 1, **caractérisé en ce que** durant l'étape de façonnage lesdites lèvres (5) sont façonnées de telle sorte qu'elles forment un angle A avec le plan D de la feuille (3) et qu'elles présentent des extrémités de lèvres A perpendiculaires audit plan D de la feuille (3).

3. Procédé selon la revendication 2, **caractérisé en ce que** durant l'étape de sertissage par matriçage, lesdites extrémités de lèvre (7) réalisent, lors du redressement, un biseau d'angle A avec la perpendiculaire audit plan D de la feuille (3), constituant, avec ladite matière (2) fluée de ladite surface (1), un ancrage sûr (8) en queue d'aronde.

4. Procédé selon l'une quelconque des revendications 1 à 3, **caractérisé en ce que** la feuille (3), est réalisée dans un métal plus dur que celui de ladite surface (1).

5. Procédé selon l'une quelconque des revendications 1 à 4, **caractérisé en ce que** le métal (2) relativement mou de ladite surface, est en aluminium, cuivre, étain, plomb, ou alliage d'un ou plusieurs de ces métaux.

6. Procédé selon l'une des revendications 1 à 5, **caractérisé en ce que** la feuille (3) est en métal ou alliage ferreux ayant des propriétés magnétiques.

7. Procédé conforme à la revendication 6, **caractérisé en ce que** la feuille (3) est en acier inoxydable.

8. Procédé conforme à l'une des revendications 1 à 7, **caractérisé en ce que** le matriçage est effectué par frappe.

9. Procédé conforme à l'une des revendications 1 à 7, **caractérisé en ce que** le matriçage est effectué par laminage.

## Claims

1. A method of modifying the characteristics of a surface (1) of metal (2) by pressing a perforated sheet (3) of another metal (4) on to the said surface (1), the perforated sheet (3) being fixed to the surface (1) by die forming wherein, in the method:
- the perforated sheet (3) is shaped so that each perforation (6) has a lip (5) and a lip end (7), and
- the thus-shaped sheet (3) is pressed on to the surface (1), when the surfaces (5) of the said perforations (6) form protuberances extending towards the surface (1),
**characterised in that**
- the shaped sheet (3) is crimped on to the said surface (1) so that the lip ends (7) penetrate into the material (2) constituting the surface (1) and the lips (5) are straightened in the plane (D) of the perforated sheet (3), so that the sheet is firmly anchored on to the said surface by the straightened lips (5) and lip ends (7) associated with the creep of material (2) from the surface (1) into the perforations (6).

2. A method according to claim 1, **characterised in that** during the shaping step the lips (5) are shaped so that they form an angle A with the plane D of the sheet (3) and the lips have ends A perpendicular to the said plane D of the sheet (3).

3. A method according to claim 2, **characterised in that** during the step of crimping by die forming, the lip ends (7), when straightened, make a bevel at an angle A to the perpendicular to the plane D of the sheet (3), resulting in firm dovetail anchoring (8) in co-operation with the said material (2) creeping from the surface (1).

4. A method according to any one of claims 1 to 3, **characterised in that** the sheet (3) is made of a harder metal than the surface (1).

5. A method according to any one of claims 1 to 4, **characterised in that** the relatively soft metal (2) constituting the surface is aluminium, copper, tin, lead or an alloy of one or more of these metals.

6. A method according to any one of claims 1 to 5, **characterised in that** the sheet (3) is of ferrous metal or alloy having magnetic properties.

7. A method according to claim 6, **characterised in that** the sheet (3) is of stainless steel.

8. A method according to any one of claims 1 to 7, **characterised in that** die forming is effected by stamping.

9. A method according to any one of claims 1 to 7, **characterised in that** die forming is effected by rolling.

## Patentansprüche

1. Verfahren zum Ändern der Eigenschaften einer Oberfläche (1) aus Metall (2) durch Aufbringen eines perforierten Blatts (3) aus einem anderen Metall (4) auf die Oberfläche (1), wobei das perforierte Blatt (3) auf der Oberfläche (1) durch Matrizieren befestigt werden soll, bei welchem Verfahren:
- das perforierte Blatt (3) derart gestaltet wird, dass jede Perforation (6) eine Lippe (5) und ein Lippenende (7) aufweist; und
- das so gestaltete Blatt (3) auf die Oberfläche (1) aufgebracht wird, wobei die Lippen (5) der Perforationen (6) zur Oberfläche (1) gerichtete Vorsprünge formen;
**dadurch gekennzeichnet, dass**
das gestaltete Blatt (3) durch Matrizieren auf die Oberfläche (1) eingesenkt wird, so dass die Lippenenden (7) in das Material (2) der Oberfläche (1) eindringen und die Lippen (5) in die Ebene D des perforierten Blatts (3) gerichtet werden, wobei das Richten der Lippen (5) und der Lippenenden (7) verbunden mit dem plastischen Fließen des Materials (2) der Oberfläche (1) in die Perforationen (6) eine sichere Verankerung des Blatts auf der Oberfläche bildet.

2. Verfahren nach Anspruch 1,
**dadurch gekennzeichnet, dass** während des Gestaltungsschritts die Lippen (5) derart gestaltet werden, dass sie einen Winkel A mit der Ebene D des Blatts (3) formen und dass sie senkrecht zur Ebene D des Blatts (3) stehende Lippenenden (7) aufweisen.

3. Verfahren nach Anspruch 2,
**dadurch gekennzeichnet, dass** während des Einsenkschritts durch Matrizieren die Lippenenden (7) beim Richten eine Abschrägung mit dem Winkel A zur Senkrechten der Ebene D des Blatts (3) bilden, welche mit dem plastisch geflossenen Material (2) der Oberfläche (1) eine sichere schwalbenschwanzförmige Verankerung formen.

4. Verfahren nach einem der Ansprüche 1 bis 3,
**dadurch gekennzeichnet, dass** das Blatt (3) aus einem härteren Metall als die Oberfläche (1) gefertigt ist.

5. Verfahren nach einem der Ansprüche 1 bis 4,
**dadurch gekennzeichnet, dass** das relativ weiche Metall (2) der Oberfläche aus Aluminium, Kupfer, Zinn, Blei oder einer Legierung aus einem oder mehrerer dieser Metalle besteht.

6. Verfahren nach einem der Ansprüche 1 bis 5,
**dadurch gekennzeichnet, dass** das Blatt (3) aus einem Metall oder einer eisenhaltigen Legierung mit magnetischen Eigenschaften besteht.

7. Verfahren nach Anspruch 6,
**dadurch gekennzeichnet, dass** das Blatt (3) aus nichtoxidierbarem Stahl besteht.

8. Verfahren nach einem der Ansprüche 1 bis 7,
**dadurch gekennzeichnet, dass** das Matrizieren durch Schlagen erfolgt.

9. Verfahren nach einem der Ansprüche 1 bis 7,
**dadurch gekennzeichnet, dass** das Matrizieren durch Walzen erfolgt.
